Europäisches Patentamt

European Patent Office

Office européen des brevets

(19)

(11) Publication number: **0 200 405**

**A1**

(12) # EUROPEAN PATENT APPLICATION

(21) Application number: **86302735.5**

(22) Date of filing: **14.04.86**

(51) Int. Cl.⁴: **C 21 C 5/52**

(30) Priority: **15.04.85 GB 8509629**

(43) Date of publication of application:
**05.11.86 Bulletin 86/45**

(84) Designated Contracting States:
**BE DE FR IT SE**

(71) Applicant: **British Steel Corporation**
**9 Albert Embankment**
**London SE1 7SN(GB)**

(72) Inventor: **Spenceley, Gene Donald**
**8 Croft Hills**
**Tamebridge Stokesley North Yorkshire(GB)**

(72) Inventor: **Welbourn, Brian Cochrane**
**28 Argyle Road**
**Whitby North Yorkshire(GB)**

(74) Representative: **Heath, Peter William Murray**
**FRY HEATH & CO. Seloduct House 16-18 Station Road**
**Redhill Surrey RH1 1NF(GB)**

(54) Improvements in or relating to the melting of ferrous solids.

(57) The invention provides a process for melting steel in an arc furnace including the steps of charging the furnace with ferrous scrap; injecting oxygen into the furnace in association with coal in granular or powder form such as to combust the coal within the scrap charge.

FIG.1.

Improvements in or Relating to the
Melting of Ferrous Solids
-------------------------------------

This invention relates to the melting of ferrous solids. The invention particularly relates to melting a ferrous charge in an electric arc furnace.

The high cost of electrical energy utilised in arc furnaces renders electric arc furnace operation extremely expensive, and attempts have been made in the past to reduce the requirement of electrical energy in arc furnaces by introducing a primary fuel, such as oil, or natural gas during arc furnace melting. Similarly, it has previously been proposed to inject oxygen during the melting period in an arc furnace to increase the heat input.

However, oil and natural gas are expensive fuels, and excessive use of oxygen alone can lead to iron yield penalties.

It is an object of the present invention to overcome or at least substantially reduce the problems hereinbefore mentioned.

According to one aspect of the invention there is provided a process for melting steel in an arc furnace including the steps of charging the furnace with ferrous scrap; injecting oxygen into the furnace in association with coal in granular form (including powdered form) such as to combust the coal within the scrap charge, whereby replacing a portion of the electrical energy required for melting the scrap charge, for producing a steel melt in the furnace.

It has been found that by means of the invention the coal burns with the injected oxygen and acts to heat the scrap charge and produce a steel melt in the furnace.

According to another aspect of the invention there is provided an arc furnace including means for charging the furnace with ferrous scrap, means for injecting oxygen into the furnace and means for injecting, at the same time, coal in granular form into the furnace to combust with the oxygen.

After production of a significant pool of molten metal, scrap charge may continue to be added, and the coal and oxygen may continue to be injected into the vessel, to provide heat to assist melting the incoming scrap charge. In this case it may be advantageous during the continuing process to inject a stirring or processing gas directly into the steel melt from below the surface of the melt therein to aid melting by assisting heat transfer.

The granular or powdered coal may be in a wide range of sizes from, for example, 3mm mean diameter down to 500 to 200 microns, and can even, in some instances, be less than 45 microns in individual particle size.

The coal used may be of any suitable kind for reducing to the required size and combustion capability, such as medium to high volatile general purpose coals.

The injection system for the coal and the oxygen may be by means of a combined injection lance system so that in combination a burner effect is created. Thus, a co-axial lance may be used where the inner pipe is used for the oxygen injection whilst the outer annular pipe is used for the injection of coal. This configuration is found to give protection against wear of the lance due, to the disociation of the coal at the lance tip, thus obviating the need for water cooling of the lance.

In an alternative arrangement several totally separate injection lances, although closely associated with each other, may be utilised for the oxygen and coal.

In yet another arrangement the coal and oxygen may be delivered to a single common lance for injection and combustion in the furnace.

A variety of dispensing equipment can be utilised for feeding the coal to its delivery pipe.

Thus, dispensing can be by means of a conventional screw feed system in a container of powdered or granulated coal, which may be air agitated, supplying the coal to its delivery pipe.

In an alternative arrangement, proprietary equipment can be used which successively grinds,sometimes dries and then dispenses to its delivery  pipe, coal supplied thereto.

The rates of injection of coal and oxygen may be varied to meet local circumstances and requirements and, in particular, the operating requirements of the furnace concerned.   The proportion of coal to oxygen may be such as to be at approximately stoichiometric levels, although such proportions may vary depending upon whether carbon is to be added to or subtracted from the charge in the furnace for refining purposes.

In order that the invention may be more readily understood, one embodiment thereof will now be described by way of example with reference to the accompanying drawings in which :-

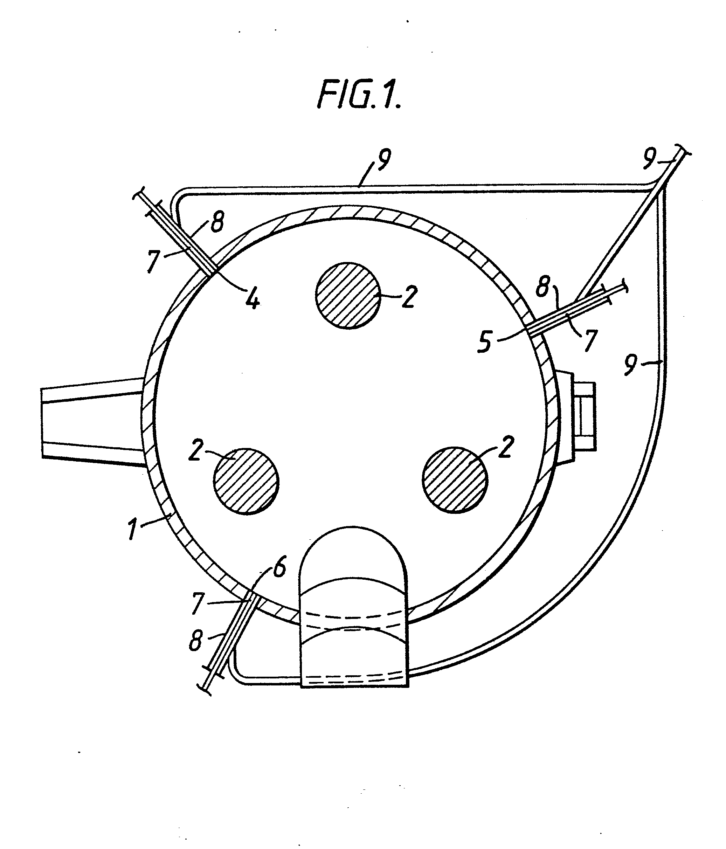

Figure 1 is a schematic sectional elevation of an arc furnace incorporating apparatus for carrying out the invention;

Figure 2 is a schematic sectional view of the arrangement of Figure 1; and

Figure 3 is a sectional view of a lance for use in the arrangement of Figure 1.

Referring to the drawings, it will be seen that there is an arc furnace 1 having the usual set of three electrodes 2. The furnace is provided with a charge of scrap 3. A plurality of injection lances for coal and oxygen are provided. Thus three ports 4, 5, 6 provided around the periphery of the furnace into which are inserted three lances of a co-axial nature. The inner pipe 7 of each lance is connected to an oxygen supply, whilst the outer pipe 8 of the lance is connected via a conduit 9 to a coal dispensing system (not shown) of any convenient kind, such as one of those discussed hereinabove.

In one example of the use of the invention in the furnace illustrated constituting a standard 150 tonne furnace, the three lances were provided with coal of 45 micron particle size having a total input rate of 21kg per minute. This material was produced and dispensed in one operation by means of apparatus (not shown) in which feed material of lump "washed smalls" coal supplied from a colliery was dried, comminuted and dispensed in an air carrier through the outer annular pipe of each lance. Oxygen was supplied through the central pipe of each lance at approximately stoichiometric proportions. Melting of the scrap charge commenced to form an initial pool 10 of melt. An inert stirring gas to assist melting can be introduced via inlet pipe 11 (or porous brick).

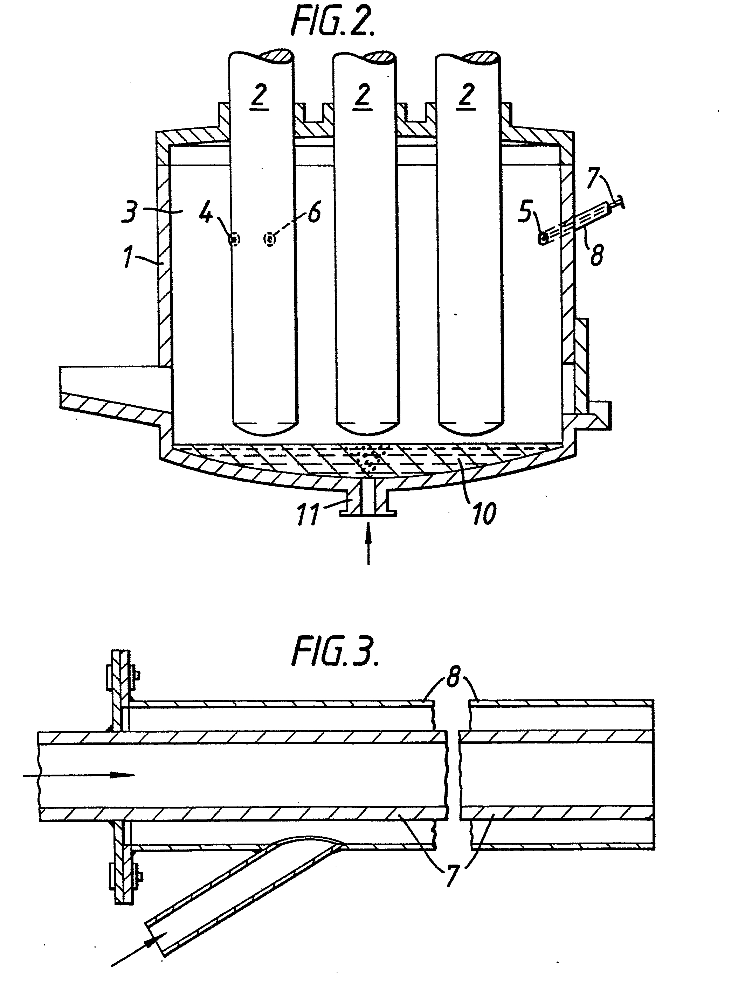

The lance shown in Figure 3 has been found to be surprisingly useful in supplying oxygen and coal to the furnace 1. It is not water cooled but has nonetheless been found to be subject to minimal wear at its inner (exit) end. Thus, in practice, the wear has been measured at as little as 2-3mm over 45-60 casts.

It was found, typically, that a saving in electricity consumption to melt out a standard furnace charge of scrap, of approximately 27 kwh per tonne was obtained and that, in addition, an increase in melting rate of the scrap from 76 to 84 tonnes per hour was obtained in comparision with non injected melting sequences.

In the process of the invention oxygen and coal may be injected at the same time as the operation of electric arc melting during those parts of the operating cycle of the furnace when a scrap charge is present above a liquid melt in the furnace.

Again oxygen and coal may only be injected during those parts of the operating cycle of the furnace when the temperature and extent of the scrap charge are such as to allow efficient utilisation of energy released by the combination of the coal with the oxygen.

Typically injection may, for example, take place for 50% of the total melting time of the furnace operating cycle. Thus with a triple charge cycle for example this could involve, say, 20 minutes injection for the first charge (which remains relatively cool and in the form of a general self supporting network of scrap for the longest time of the three charges) reducing to 15 minutes for the second charge and 10 minutes for the third charge.

By means of the invention an improved melting cycle for an arc furnace is provided with saving in electrical power required, and an increase in the melting rate of the scrap charge.

Claims
------

1.   A process for melting steel in an arc furnace including the steps of charging the furnace with ferrous scrap; injecting oxygen into the furnace in association with coal in granular form such as to combust the coal within the scrap charge, whereby replacing a portion of the electrical energy required for melting the scrap charge and producing a steel melt in the furnace.

2.   A process as claimed in Claim 1 wherein scrap charge is continued to be added, and the coal and oxygen continued to be injected into the vessel, to provide heat to assist melting the incoming scrap charge.

3.   A process as claimed in Claim 2 wherein during the continuing process a stirring gas is injected directly into the steel melt from below the surface of the melt therein to aid melting by assisting heat transfer.

4.   A process as claimed in any one of the preceding claims wherein oxygen and coal are injected at the same time as the operation of electric arc melting during those parts of the operating cycle of the furnace when a scrap charge is present above a liquid melt in the furnace.

5. A process as claimed in any one of the preceding claims wherein oxygen and coal are only injected during those parts of the operating cycle of the furnace when the temperature and extent of the scrap charge are such as to allow efficient utilisation of energy released by the combination of the coal with the oxygen.

6. A process as claimed in any one of the preceding claims wherein the coal used is a medium to high volatile general purpose coals.

7. A process as claimed in any one of the preceding claims wherein the granular coal is less than 500 microns in mean diameter.

8. A process as claimed in Claim 7 wherein the granular coal is of the order of 45 microns or less in individual particle size.

9. A process as claimed in any one of the preceding claims wherein the coal and oxygen are injected by means of a combined injection lance system.

10. A process as claimed in Claim 9 wherein the coal and oxygen are injected by means of a co-axial lance, where the inner pipe is used for the oxygen whilst the outer annular pipe is used for the coal.

11. A process as claimed in any one of the preceding claims wherein the coal is dispersed for feeding to its delivery pipe by means of equipment adapted to grind, and disperse coal delivered thereto.

12. A process as claimed in any one of the preceding claims wherein the coal and oxygen are injected at approximately stochiometric proportions one to the other.

13. An arc furnace including means for charging the furnace with ferrous scrap, means for injecting oxygen into the furnace and means for injecting, at the same time, coal in granular form into the furnace to combust with the oxygen.

14. A furnace as claimed in Claim 13 including means for injecting a stirring gas directly into a melt formed therein.

15. A furnace as claimed in Claim 13 or 14 wherein at least one combined injection lance system is provided for injecting the coal and the oxygen.

16. A furnace as claimed in Claim 15 wherein the or each lance system comprises a co-axial lance, the inner pipe of which is adapted to pass oxygen, and the outer annular pipe of which is adapted to pass coal.

17. A furnace as claimed in any one of Claims 13 to 16 wherein a plurality of injection lances for oxygen and coal are spaced around the periphery of the furnace whereby to provide full injection coverage of the scrap charge.

18. A furnace as claimed in any one of Claims 13 to 17 including quipment adapted to grind and dispense to a furnace delivery pipe coal delivered thereto.

1/2

FIG.1.

FIG.2.

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-2 352 887 (BRITISH STEEL) <br><br> * Figure 3; page 7, line 28 - page 8, line 12 * | 1-5,9, 14,15 | C 21 C 5/52 |
| Y | FR-A-2 472 019 (DAIDO) <br><br> * Figure 1; claims; page 15, line 25 - page 17, example 3 * | 1-5,7, 8,18 | |
| Y | FR-A-2 364 971 (ARMCO) <br><br> * Claims * | 1-5,7, 8,18 | |
| A | FR-A-1 281 933 (INSTITUT DE RECHERCHES) | | |
| A | PATENTS ABSTRACTS OF JAPAN, vol. 4, no. 140, 3rd October 1980, 88 C 26; & JP - A - 55 89 414 (DAIDO TOKUSHUKO K.K.) 07-07-1980 | | TECHNICAL FIELDS SEARCHED (Int. Cl.4) <br><br> C 21 C |

The present search report has been drawn up for all claims

| Place of search | Date of completion of the search | Examiner |
|---|---|---|
| THE HAGUE | 05-08-1986 | OBERWALLENEY R.P.L.I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82